# FASCICULE DE BREVET EUROPEEN

(11) **EP 4 577 430 B1**
(45) Date de publication et mention de la délivrance du brevet: **02.12.2026**
(21) Numéro de dépôt: 23750659.7
(22) Date de dépôt: 17.07.2023
(51) Int. Cl.: B60Q 3/10, B60Q 3/217, B60Q 3/43, B60Q 3/64, B60Q 3/78

(54) **VEHICULE AUTOMOBILE AVEC DISPOSITIF D'ECLAIRAGE INTERIEUR**
KRAFTFAHRZEUG MIT EINER INNENBELEUCHTUNGSEINRICHTUNG
MOTOR VEHICLE HAVING AN INTERNAL LIGHTING DEVICE

(30) Priorité: 26.08.2022 FR 2208585
(43) Date de publication de la demande: 02.07.2025
(73) Titulaire: Stellantis Auto SAS, 78300 Poissy (FR)
(72) Inventeur: LAURANT, Hugues, 25200 MONTBELIARD (FR); BOUSGHIRI, Hafid, CASABLANCA, 20270 (MA)
(74) Mandataire: BCIP
(86) Numéro de dépôt international: PCT/FR2023/051101
(87) Numéro de publication internationale: WO 2024/042279

(56) Documents cités:
- WO-A1-2012/056799
- FR-A1- 3 056 801
- FR-A1- 3 104 088
- JP-A- 2021 017 179

## Description

La présente invention revendique la priorité de la demande française 2208585 déposée le 26 août 2022. L'invention a trait à l'éclairage intérieur d'un véhicule automobile.

Afin de garantir la luminosité dans l'habitacle d'un véhicule automobile pour donner au conducteur et aux autres passagers une sensation de confort et d'apaisement, des ensembles d'éclairage intérieur qui permettent de réaliser des fonctions d'éclairage utiles et/ou des fonctions d'éclairage dites d'ambiance peuvent être installés au sein de l'habitacle. En particulier, des systèmes d'éclairage d'ambiance diffusant une lumière de faible intensité peuvent être installés sur différentes surfaces des garnitures présentes dans l'habitacle, par exemple au niveau des panneaux intérieurs des ouvrants et/ou de la planche de bord.

Le document WO2012056799A1 concerne un dispositif d'éclairage pour une voiture automobile.

Le document JP2021017179A concerne un éclairage d'ambiance permettant d'allumer simultanément un éclairage latéral de porte et un éclairage latéral de tableau de bord sans avoir à installer de sources lumineuses dédiées.

Le document US 10,266,100 concerne un véhicule avec au moins un système d'éclairage avec un dispositif d'éclairage allongé, destiné à produire une bande lumineuse le long d'une section prédéterminée du dispositif d'éclairage. Le dispositif d'éclairage comprend un premier tronçon au niveau de l'intérieur du véhicule et un deuxième tronçon au niveau de l'extérieur du véhicule. Le système d'éclairage est conçu pour produire simultanément une bande lumineuse du même type le long d'une section du premier tronçon ainsi que le long d'une section du deuxième tronçon. Le premier tronçon et le deuxième tronçon sont conçus comme un corps de guide de lumière d'un seul tenant, permettant une continuité de la lumière entre l'espace intérieur et l'espace extérieur du véhicule.

Le document US 10,195,987 concerne un véhicule avec notamment un ou plusieurs dispositifs d'éclairage de l'habitacle de forme allongée pour produire de la lumière visible au sein de l'habitacle, ces dispositifs d'éclairage étant configurés pour être allumés en accord avec un ou plusieurs dispositifs clignotants agencés sur le véhicule pour produire un clignotant de changement de direction ou un clignotant d'avertissement.

Le document US 10,800,326 concerne un véhicule comprenant au moins un moyen d'éclairage linéaire permettant l'éclairage direct et/ou indirect de l'habitacle. Ce moyen d'éclairage s'étend au moins par endroits horizontalement le long d'au moins un composant du véhicule et est divisé horizontalement en plusieurs segments d'éclairage. Ceux-ci peuvent être activés en fonction d'informations contenues dans un système de navigation du véhicule, comme par exemple, en fonction de la destination d'une navigation en cours et/ou d'une destination fournie à partir d'une base de données pour une future navigation.

Dans la plupart des configurations présentées ci-dessus, il n'existe pas une continuité visuelle de la lumière à l'avant de l'habitacle. Ceci est en effet empêché du fait de la configuration intérieure de l'habitacle entre le garnissage intérieur disposé le long des ouvrants latéraux avant et la planche de bord qui empêche l'installation d'un circuit imprimé continu comprenant un ensemble de diodes électroluminescentes, car il est nécessaire de prévoir l'ouverture et la fermeture des ouvrants latéraux avant.

L'invention a pour objectif de répondre à au moins un des problèmes ou inconvénients rencontrés dans l'art antérieur. En particulier, l'invention a pour objectif de proposer un véhicule automobile dont les contours avant de l'habitacle présentent une homogénéité d'éclairage lorsque les ouvrants latéraux avant se trouvent en position fermée. L'invention a également pour objectif d'améliorer l'homogénéité d'éclairage, au niveau d'une interface entre un ouvrant et une surface intérieure d'habitacle.

A cet effet, l'invention a pour objet un véhicule automobile montrant un ouvrant latéral avant, et comprenant un habitacle avec une planche de bord et un garnissage intérieur monté sur l'ouvrant latéral avant, l'habitacle comprenant en outre un premier dispositif d'éclairage solidaire dudit garnissage intérieur et un deuxième dispositif d'éclairage solidaire de la planche de bord, ledit véhicule automobile est remarquable en ce que le deuxième dispositif d'éclairage montre une extrémité avec une extension, ladite extension s'étendant longitudinalement le long du garnissage intérieure jusqu'à une extrémité avant du premier dispositif d'éclairage quand l'ouvrant latéral avant est en position fermée.

Comme on l'aura compris à la lecture de la définition qui vient d'en être donnée, l'invention a trait à un véhicule automobile où, lorsque les ouvrants latéraux avant sont en position de fermeture, il existe une continuité entre un dispositif d'éclairage longitudinal, s'étendant le long du garnissage intérieur présenté par les ouvrants latéraux avant, et un dispositif d'éclairage transversal, s'étendant le long de la planche de bord. Cette continuité d'éclairage est le résultat d'une extension du dispositif d'éclairage transversal, l'extension étant dirigée vers l'arrière du véhicule et l'extrémité arrière de ladite extension faisant face à l'extrémité avant du dispositif d'éclairage longitudinal. Cette continuité d'éclairage entre le dispositif d'éclairage longitudinal et le dispositif d'éclairage transversal permet de rendre l'éclairage de l'interface définie entre l'ouvrant et la surface intérieur de l'habitacle. Le contour avant de l'habitacle est donc totalement éclairé lorsque l'ouvrant latéral avant est en position fermée.

Avantageusement, le garnissage intérieur présente une extrémité avant avec une alcôve, l'alcôve délimitant une zone supérieure et une zone inférieure du garnissage intérieur, l'extension du deuxième dispositif d'éclairage étant en regard avec ladite zone inférieure. Par exemple, l'extension du deuxième dispositif d'éclairage est au moins partiellement logée dans ladite zone inférieure.

De préférence, une surface apte à réfléchir la lumière est agencée sur l'alcôve du garnissage intérieur en regard de l'extension du deuxième dispositif d'éclairage. Par exemple, la surface apte à réfléchir la lumière est agencée par collage sur l'alcôve du garnissage intérieur en regard de l'extension du deuxième dispositif d'éclairage.

Par exemple, la surface apte à réfléchir la lumière est une pièce en métal. Préférablement, la surface apte à réfléchir la lumière est en aluminium. Par exemple, la surface apte à réfléchir la lumière est en aluminium brossé.

De préférence, la surface apte à réfléchir la lumière est une pièce montrant au moins un motif de sorte à atténuer la luminosité. Par exemple, la surface apte à réfléchir la lumière est une pièce montrant au moins un motif de sorte à absorber une lumière présentant une longueur d'onde comprise entre 400 nm et 700 nm.

Avantageusement, chaque extrémité de la planche de bord montre un insert s'étendant vers l'arrière du véhicule le long dudit garnissage intérieur, et l'extension du deuxième dispositif d'éclairage est disposée et/ou fixée sur les inserts de la planche de bord.

Avantageusement, l'extension du deuxième dispositif d'éclairage comprend un guide de lumière. De préférence, le guide de lumière est en verre.

De préférence, l'extension du deuxième dispositif d'éclairage comprend une gaine fixée sur la zone inférieure du garnissage intérieure, ladite gaine incorporant ledit guide de lumière. Par exemple, la gaine est en plastique. Par exemple, la gaine comprend au moins un moyen d'encliquetage.

De préférence, le guide de lumière est surmonté par un diffuseur de lumière. Avantageusement, le diffuseur de lumière est en plastique transparent. Par exemple, le diffuseur de lumière est en polycarbonate, préférablement du polycarbonate laiteux.

L'invention sera bien comprise et d'autres aspects et avantages apparaîtront clairement à la lecture de la description qui suit donnée en référence aux figures annexées sur lesquelles :

[Fig. 1] La figure 1 représente un habitacle d'un véhicule automobile dépourvu de système d'éclairage intérieur.

[Fig. 2] La figure 2 représente un habitacle d'un véhicule automobile où l'éclairage a été rendu homogène selon la configuration de l'invention.

Dans la description qui suit, le terme « comprendre » est synonyme de « inclure » et n'est pas limitatif en ce qu'il autorise la présence d'autres étapes dans le procédé ou d'autres éléments dans le cadre d'étanchéité ou le véhicule auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Dans la présente description, le terme « longitudinal » et le terme « transversal » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule.

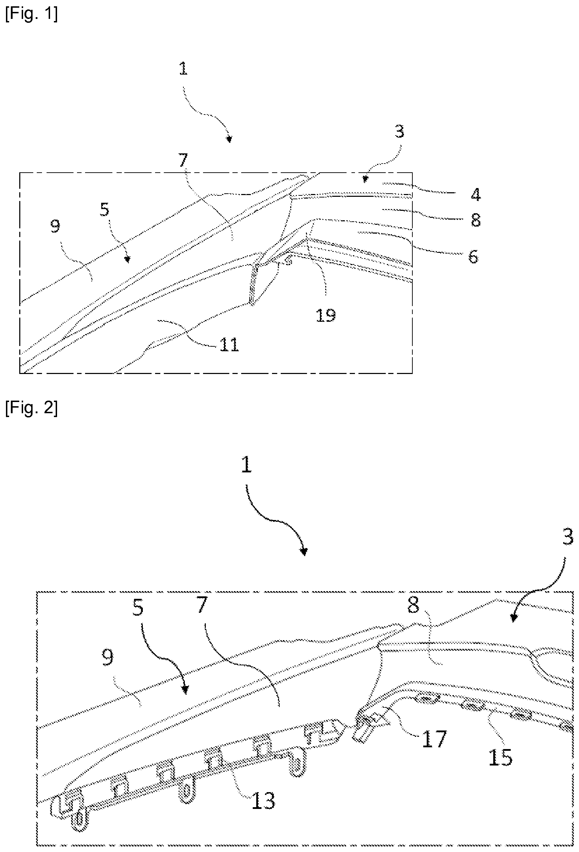

La figure 1 représente un habitacle 1 d'un véhicule automobile comprenant une planche de bord 3 et aussi un garnissage intérieur 5. Celui-ci est monté sur l'ouvrant latéral avant montré par le véhicule. Dans l'optique d'éclairer l'habitacle 1 du véhicule, différents dispositifs d'éclairage peuvent être installés en son sein. Ainsi, comme montré sur la figure 2, au moins un premier dispositif d'éclairage 13 solidaire du garnissage intérieur 5 et au moins un deuxième dispositif d'éclairage 15 solidaire de la planche de bord 3 sont par exemple présents au sein de l'habitacle 1. Par exemple, la planche de bord 3 montre une alcôve 8 délimitant une zone supérieure 4 et une zone inférieure 6 de la planche de bord, et le ou les deuxièmes dispositifs d'éclairage 15 solidaires de la planche de bord 3 sont en regard avec la zone inférieure 6 de la planche de bord.

Comme représenté à la figure 2, afin de garantir une homogénéité de l'éclairage au niveau de la partie avant de l'habitacle 1 quand l'ouvrant latéral avant est en position fermée, et plus spécifiquement au niveau de l'interface entre un ouvrant latéral avant et la surface intérieure de l'habitacle, notamment au niveau du garnissage intérieur 5 monté sur l'ouvrant latéral avant, le véhicule automobile selon l'invention est remarquable en ce que le deuxième dispositif d'éclairage 15 montre une extrémité avec une extension 17, et en ce que l'extension 17 s'étend longitudinalement le long du garnissage intérieure 5 jusqu'à une extrémité avant du premier dispositif d'éclairage 13 quand l'ouvrant latéral avant est en position fermée.

Le garnissage intérieur 5 présente généralement une extrémité avant avec une alcôve 7. L'alcôve 7 délimite une zone supérieure 9 et une zone inférieure 11 du garnissage intérieur et l'extension 17 du deuxième dispositif d'éclairage est en regard avec la zone inférieure 11 du garnissage intérieur. Par exemple, l'extension 17 du deuxième dispositif d'éclairage est au moins partiellement logée dans ladite zone inférieure 11. L'extension 17 du deuxième dispositif d'éclairage solidaire de la planche de bord 3 permet d'orienter la lumière vers l'environnement situé à l'interface entre l'ouvrant latéral avant et la surface intérieure de l'habitacle quand l'ouvrant latéral avant est en position fermée. Ainsi, la lumière est dirigée sur l'alcôve 7 du garnissage intérieur, préférentiellement sur l'extrémité avant de ladite alcôve.

L'extrémité de la planche de bord 3 montre généralement un insert 19 s'étendant vers l'arrière du véhicule le long dudit garnissage intérieur 5. L'insert 19 permet, lorsque l'ouvrant latéral avant est en position fermée, d'assurer la continuité entre la planche de bord 3 et le garnissage intérieure 5, qui sont généralement réalisé dans le même matériau et dans le même coloris. L'extension 17 du deuxième dispositif d'éclairage est ainsi avantageusement disposée et/ou fixée sur les inserts 19 de la planche de bord, mettant à profit le fait que la face arrière de l'extrémité arrière de l'insert 19 de la planche de bord fait face à la face avant de l'extrémité avant du garnissage intérieur 5 lorsque l'ouvrant latéral avant est en position fermée.

Le premier dispositif d'éclairage 13 solidaire du garnissage intérieur 5 et le deuxième dispositif d'éclairage 15 solidaire de la planche de bord 3 comprennent avantageusement chacun d'eux au moins un circuit imprimé avec un ensemble de diodes électroluminescentes. Néanmoins, l'extension 17 du deuxième dispositif d'éclairage, afin d'être placée en regard de la zone inférieur 11 du garnissage intérieur 5, est avantageusement composée d'un guide de lumière, moins encombrant qu'un circuit imprimé. Un guide de lumière est un composant optique utilisé pour transporter la lumière d'une diode électroluminescente montée sur un circuit imprimé à l'endroit où la lumière est nécessaire. Le guide de lumière est ainsi connecté à la diode électroluminescente située à l'extrémité du deuxième dispositif d'éclairage 15. Le guide de lumière offre ainsi une plus grande flexibilité de distribution de la lumière et permet un agencement aisé de l'extension 17 sur l'insert 19 de planche de bord.

Par exemple, le guide de lumière de l'extension 17 du deuxième dispositif d'éclairage est en verre.

Il est avantageux que le guide de lumière de l'extension 17 soit incorporé dans une gaine, tout comme le ou les circuits imprimés avec un ensemble de diodes électroluminescentes sont également préférablement incorporés dans une gaine similaire. Par exemple, la gaine est en plastique. Ainsi, le guide de lumière de l'extension et/ou le ou les circuits imprimés avec un ensemble de diodes électroluminescentes sont protégés d'une éventuelle cassure. La gaine est d'autant plus intéressante parce que le guide de lumière de l'extension 17 peut être en verre.

La gaine, incorporant le guide de lumière de l'extension 17 et/ou le ou les circuits imprimés avec un ensemble de diodes électroluminescentes des premier et deuxième dispositifs d'éclairage (13, 15) comprend préférentiellement au moins un moyen d'encliquetage. Celui-ci sert à la fixation des premier et deuxième dispositifs d'éclairage (13, 15) sur respectivement le garnissage intérieur 5 et la planche de bord 3 et à la fixation de l'extension 17 du deuxième dispositif d'éclairage sur le garnissage intérieur 5, préférentiellement au niveau de la zone inférieur 11.

Le guide de lumière de l'extension 17 et/ou les diodes électroluminescentes du ou des circuits imprimés des premier et deuxième dispositifs d'éclairage (13, 15) peuvent être avantageusement surmontés par un diffuseur de lumière, afin d'optimiser l'éclairage. De préférence, le diffuseur de lumière est en plastique transparent, comme par exemple du polycarbonate, plus avantageusement du polycarbonate opalin ou laiteux. Le diffuseur de lumière permet en outre de protéger le guide de lumière de l'extension 17 et/ou les diodes électroluminescentes du ou des circuits imprimés des premier et deuxième dispositifs d'éclairage (13, 15).

Une surface apte à réfléchir la lumière peut être agencée sur l'alcôve 7 du garnissage intérieur et/ou sur l'alcôve 8 de la planche de bord. Cela permet d'aider à la diffusion de la lumière au sein de l'habitacle.

De préférence, une surface apte à réfléchir la lumière peut être agencée au niveau de l'extrémité avant de ladite alcôve 7, en regard de l'extension 17 du deuxième dispositif d'éclairage.

Par exemple, la ou les surfaces aptes à réfléchir la lumière sont agencées par collage sur l'alcôve 7 du garnissage intérieur. Une telle surface est préférentiellement une surface métallique, comme par exemple de l'aluminium ou de l'aluminium brossé si une surface métallique brossée est préférée. Le brossage d'une surface métallique permet de rayer la surface métallique, ce qui confère au métal des propriétés anisotropes, atténuant ainsi l'effet de brillance. La ou les surfaces aptes à réfléchir la lumière peuvent par ailleurs comprendre un ou plusieurs motifs qui permettent ainsi d'atténuer la luminosité car le ou les motifs ne réfléchissent pas la lumière. Ces motifs absorbent donc la lumière visible, c'est-à-dire de la lumière présentant une longueur d'onde comprise entre 400 nm et 700 nm.

## Revendications

1. Véhicule automobile montrant un ouvrant latéral avant, et comprenant un habitacle (1) avec une planche de bord (3) et un garnissage intérieur (5) monté sur l'ouvrant latéral avant, l'habitacle (1) comprenant en outre un premier dispositif d'éclairage (13) solidaire dudit garnissage intérieur (5) et un deuxième dispositif d'éclairage (15) solidaire de la planche de bord (3), ledit véhicule automobile est **caractérisé en ce que** le deuxième dispositif d'éclairage (15) montre une extrémité avec une extension (17), ladite extension (17) s'étendant longitudinalement le long du garnissage intérieur (5) jusqu'à une extrémité avant du premier dispositif d'éclairage (13) quand l'ouvrant latéral avant est en position fermée.

2. Véhicule automobile selon la revendication 1, **caractérisé en ce que** le garnissage intérieur (5) présente une extrémité avant avec une alcôve (7), l'alcôve (7) délimitant une zone supérieure (9) et une zone inférieure (11) du garnissage intérieur, l'extension (17) du deuxième dispositif d'éclairage étant en regard avec ladite zone inférieure (11).

3. Véhicule selon la revendication 2, **caractérisé en ce que** l'extension (17) du deuxième dispositif d'éclairage comprend un guide de lumière ; de préférence, le guide de lumière est en verre.

4. Véhicule selon la revendication 3, **caractérisé en ce que** le guide de lumière est surmonté par un diffuseur de lumière ; de préférence, le diffuseur de lumière est en plastique transparent.

5. Véhicule selon l'une des revendications 2 à 4, **caractérisé en ce qu'**une surface apte à réfléchir la lumière est agencée sur l'alcôve (7) du garnissage intérieur en regard de l'extension (17) du deuxième dispositif d'éclairage; de préférence, par collage.

6. Véhicule selon la revendication 5, **caractérisé en ce que** la surface apte à réfléchir la lumière est une pièce en métal ; de préférence, en aluminium.

7. Véhicule selon la revendication 5 ou 6, **caractérisé en ce que** la surface apte à réfléchir la lumière est une pièce montrant au moins un motif de sorte à atténuer la luminosité.

## Patentansprüche

1. Kraftfahrzeug, das eine vordere Seitenwand aufweist und eine Fahrgastzelle (1) mit einem Armaturenbrett (3) und einer Innenauskleidung (5) aufweist, die an der vorderen Seitenwand angebracht ist, wobei die Fahrgastzelle (1) ferner eine erste Beleuchtungseinrichtung (13) aufweist, die mit der Innenauskleidung (5) verbunden ist, und eine zweite Beleuchtungseinrichtung (15), die mit dem Armaturenbrett (3) verbunden ist, wobei das Kraftfahrzeug **dadurch gekennzeichnet ist, dass** die zweite Beleuchtungseinrichtung (15) ein Ende mit einer Verlängerung (17) aufweist, wobei die Verlängerung (17) sich in Längsrichtung erstreckt entlang der Innenauskleidung (5) bis zu einem vorderen Ende der ersten Beleuchtungseinrichtung (13), wenn die vordere Seitenöffnung geschlossen ist.

2. Kraftfahrzeug nach Anspruch 1, **dadurch gekennzeichnet, dass** die Innenauskleidung (5) ein vorderes Ende mit einem Trog (7) aufweist, wobei der Trog (7) einen oberen Bereich (9) und
einen unteren Bereich (11) der Innenauskleidung begrenzt, wobei die Verlängerung (17) der zweiten Beleuchtungseinrichtung dem unteren Bereich (11) gegenüberliegt.

3. Fahrzeug nach Anspruch 2, **dadurch gekennzeichnet, dass** die Verlängerung (17) der zweiten Beleuchtungseinrichtung einen Lichtleiter umfasst; vorzugsweise ist der Lichtleiter aus Glas.

4. Fahrzeug nach Anspruch 3, **dadurch gekennzeichnet, dass** der Lichtleiter von einem Lichtdiffusor überlagert ist; vorzugsweise ist der Lichtdiffusor aus transparentem Kunststoff.

5. Fahrzeug nach einem der Ansprüche 2 bis 4, **dadurch gekennzeichnet, dass** eine lichtreflektierende Oberfläche auf der Alkove (7) der Innenauskleidung gegenüber der Verlängerung (17) der zweiten Beleuchtungseinrichtung angeordnet ist; vorzugsweise durch Kleben.

6. Fahrzeug nach Anspruch 5, **dadurch gekennzeichnet, dass** die lichtreflektierende Oberfläche ein Metallteil, vorzugsweise Aluminium, ist.

7. Fahrzeug nach Anspruch 5 oder 6, **dadurch gekennzeichnet, dass** die lichtreflektierende Oberfläche ein Teil ist, das mindestens ein Muster aufweist, um die Helligkeit zu dämpfen.

## Claims

1. Motor vehicle showing a front side door, and comprising a passenger compartment (1) with a dashboard (3) and an inner trim (5) mounted on the front side door, the passenger compartment (1) further comprising a first lighting device (13) integral with said inner trim (5) and a second lighting device (15) integral with the dashboard (3), said motor vehicle is **characterised in that** the second lighting device (15) shows one end with an extension (17), said extension (17) extending longitudinally along the inner trim (5) as far as a front end of the first lighting device (13) when the front side door is in a closed position.

2. Motor vehicle according to claim 1, wherein the inner lining (5) has a front end with an alcove (7), the alcove (7) defining an upper zone (9) and a lower zone (11) of the inner lining, the extension (17) of the second lighting device being opposite said lower zone (11).

3. Vehicle according to Claim 2, **characterised in that** the extension (17) of the second lighting device comprises a light guide; preferably, the light guide is made of glass.

4. Vehicle according to Claim 3, **characterised in that** the light guide is surmounted by a light diffuser; preferably, the light diffuser is made of transparent plastic.

5. Vehicle according to one of Claims 2 to 4, **characterised in that** a surface capable of reflecting light is arranged on the alcove (7) of the inner lining facing the extension (17) of the second lighting device; preferably, by glueing.

6. Vehicle according to Claim 5, wherein the surface capable of reflecting light is a metal component; preferably, aluminium.

7. Vehicle according to Claim 5 or 6, **characterised in that** the surface capable of reflecting light is a component showing at least one reason so as to attenuate the luminosity.
